# EUROPÄISCHE PATENTSCHRIFT

(11) **EP 2 340 468 B1**
(45) Veröffentlichungstag und Bekanntmachung des Hinweises auf die Patenterteilung: **19.09.2012**
(21) Anmeldenummer: 09736198.4
(22) Anmeldetag: 09.10.2009
(51) Int. Cl.: G05B 19/042

(54) **AUTARKES FELDGERÄT**
SELF-CONTAINED FIELD DEVICE
APPAREIL DE TERRAIN AUTONOME

(30) Priorität: 27.10.2008 DE 102008043199
(43) Veröffentlichungstag der Anmeldung: 06.07.2011
(73) Patentinhaber: Endress + Hauser Process Solutions AG, 4153 Reinach BL (CH)
(72) Erfinder: SEILER, Christian, 79424 Auggen (DE); RAPP, Dirk, 79585 Steinen (DE)
(74) Vertreter: Andres, Angelika Maria
(86) Internationale Anmeldenummer: PCT/EP2009/063181
(87) Internationale Veröffentlichungsnummer: WO 2010/049253

(56) Entgegenhaltungen:
- DE-A1- 10 309 125
- DE-A1-102006 009 979
- DE-A1-102006 062 603

## Beschreibung

Die Erfindung betrifft ein autarkes Feldgerät der Automatisierungstechnik.

In der Prozessautomatisierungstechnik ebenso wie in der Fertigungsautomatisierungstechnik werden vielfach Feldgeräte eingesetzt, die zur Erfassung und/oder Beeinflussung von Prozessgrößen dienen. Zur Erfassung von Prozessgrößen dienen Messgeräte, die jeweils mindestens einen Sensor und einen Messumformer aufweisen. Beispielsweise handelt es sich bei den Messgeräten um Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Als Feldgeräte werden im Prinzip alle Geräte bezeichnet, die prozessnah eingesetzt werden und die prozessrelevante Informationen liefern oder verarbeiten. Neben den zuvor genannten Messgeräten/Sensoren und Aktoren werden als Feldgeräte allgemein auch solche Einheiten bezeichnet, die direkt an einem Feldbus angeschlossen sind und zur Kommunikation mit den übergeordneten Einheiten dienen, wie z.B. Remote I/Os, Gateways, Linking Devices und Wireless Adapters. Eine Vielzahl solcher Feldgeräte wird von der Endress + Hauser-Gruppe hergestellt und vertrieben.

In modernen Industrieanlagen sind Feldgeräte in der Regel über Feldbussysteme, wie z.B. (Profibus®, Foundation Fieldbus®, HART®, etc. mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das angeschlossene Bussystem an eine oder gegebenenfalls auch an mehrere übergeordnete Einheit(en) übermittelt. Daneben ist auch eine Datenübertragung von der übergeordneten Einheit über das Bussystem an die Feldgeräte erforderlich; diese dient insbesondere zur Konfigurierung und Parametrierung von Feldgeräten oder zu Diagnosezwecken. Allgemein gesprochen, wird das Feldgerät über das Bussystem von der übergeordneten Einheit her bedient.

Neben einer drahtgebundenen Datenübertragung zwischen den Feldgeräten und der übergeordneten Einheit besteht auch die Möglichkeit einer drahtlosen Datenübertragung. Insbesondere in den Bussystemen Profiibus®, Foundation Fieldbus® und HART® ist eine drahtlose Datenübertragung über Funk spezifiziert. Ferner sind Funknetzwerke für Sensoren in dem Standard IEEE 802.15.4 näher spezifiziert.

Zur Realisierung einer drahtlosen Datenübertragung sind Feldgeräte beispielsweise als Funk-Feldgeräte ausgebildet. Diese weisen in der Regel eine Funkeinheit und eine Stromquelle als integrale Bestandteile auf. Dabei können die Funkeinheit und die Stromquelle in dem Feldgerät selbst oder in einem dauerhaft an dem Feldgerät angeschlossenen Funkmodul vorgesehen sein. Durch die Stromquelle wird eine autarke Energieversorgung des Feldgerätes ermöglicht.

Alternativ werden Feldgeräte ohne Funkeinheiten - also die heute im Feld installierte Basis - durch die Ankopplung eines Wireless Adapters, der eine Funkeinheit aufweist, zu einem Funk-Feldgerät aufgerüstet. Ein entsprechender Wireless Adapter ist beispielsweise in der Druckschrift WO 2005/103851 A1 beschrieben. Der Wireless Adapter wird in der Regel an eine Feldbus-Kommunikationsschnittstelle des Feldgerätes lösbar angeschlossen. Über die Feldbus-Kommunikationsschnittstelle kann das Feldgerät die über das Bussystem zu übermittelnden Daten an den Wireless Adapter senden, der diese dann über Funk an den Zielort übermittelt. Umgekehrt kann der Wireless Adapter über Funk Daten empfangen und über die Feldbus-Kommunikationsschnittstelle an das Feldgerät weiterleiten. Die Versorgung des Feldgeräts mit elektrischer Leistung erfolgt dann in der Regel über eine Energieversorgungseinheit, die dem Wireless Adapter zugeordnet ist.

Der Großteil der installierten Basis an Feldgeräten besteht heute aus HART-Geräten, also Feldgeräten, die über den HART-Standard mit einer übergeordneten Steuereinheit kommunizieren. Um 4-20mA / HART Feldgeräte in drahtlose Netzwerke zu integrieren, kommen - wie bereits erwähnt - Adapter zum Einsatz, welche die Kommunikationsanbindung an das drahtlose Netzwerk realisieren und dabei auch zyklisch automatisiert Messwerte vom angeschlossenen Feldgerät erfassen. Geeignete Adapter verfügen über eine autarke Energiequelle, wie z.B. Batterien, die sowohl den Adapter als auch das angeschlossene Feldgerät mit Energie versorgen. Zur Speisung des angeschlossenen Feldgeräts weist der Adapter eine Netzteilstufe auf, welche die geforderte Klemmenspannung beim jeweiligen 4-20mA Mess- und Versorgungsstrom zur Verfügung stellt. Aufgrund des relativ hohen Energieverbrauchs heutiger 4-20mA Feldgeräte werden diese üblicherweise nicht konstant sondern nur bei Bedarf mit Energie versorgt. Dieser getaktete Betrieb des Feldgeräts ist auch als Duty Cycle Betrieb bekannt. Ein solcher Duty Cycle Betrieb wird durch das Dokument DE 10 2006 009979 A1 illustriert.

Feldgeräte benötigen bei definiertem Mess- bzw. Versorgungsstrom eine definierte Mindest-Klemmenspannung für den regulären Betrieb. Dieser Mess- bzw. Versorgungsstrom ändert sich im Betrieb dynamisch. Nachfolgend sind unterschiedliche Betriebsphasen aufgelistet:
- Betriebsphase 'Messung mit 4-20mA Output' : Hier ändert sich der Strom proportional zum Messwert.
- Betriebsphase 'Messung mit HART only Output': Hier wird das Feldgerät im Multidrop-Betrieb betrieben. Der Strom ist während des Betriebs konstant auf einen Minimalwert eingestellt.
- Betriebsphase Startup: Hier liegt bis zur Ermittlung des ersten Messwerts ein abweichender Strom vor.

Ein entsprechendes I/O-Modul eines drahtlosen Adapters weist in der Messschleife intern verschiedene Widerstände auf, welche bei konstanter interner Speisespannung eine vom Stromfluss abhängige Klemmenspannung für den angeschlossenen Messumformer zur Verfügung stellen. Diese Widerstände sind z.B. ein Ex-Begrenzungswiderstand, ein HART Kommunikationswiderstand oder ein Messwiderstand für die analoge 4-20mA Messstromerfassung. Um die durch die internen in Reihe geschalteten Widerstände verursachten Spannungsabfälle auszugleichen, muss die interne Speisespannung des Versorgungsnetzteils so gewählt werden, dass die definierte Klemmenspannung des Feldgeräts auch beim höchsten auftretenden Strom erreicht wird. Der maximal auftretende Strom ist der Fehlerstrom, der z.B. 22mA beträgt. Die aufgeführten Widerstände, mit Ausnahme der Ex-Begrenzung, werden zudem nicht in jeder Betriebsphase zwingend benötigt, müssen heute jedoch bei der Einstellung der Speisespannung immer berücksichtigt werden. Aufgrund dieser starren auf den Worst Case Fall eingestellten internen Speisespannung wird die zur Verfügung stehende Energie nicht effizient genutzt: In vielen Betriebsphasen wird die zur Verfügung stehende Energie zu einem nicht unbedeutenden Teil verschwendet.

Der Erfindung liegt die Aufgabe zugrunde, ein autarkes Feldgerät energieeffizient zu betreiben.

Die Aufgabe wird dadurch gelöst, dass das Feldgerät über zwei Anschlussklemmen mit einem I/O Modul verbunden ist, wobei das I/O Modul als 4-20 mA / HART I/O Modul ausgestaltet ist, wobei dem I/O Modul eine steuerbare Energiequelle zugeordnet ist, über die das Feldgerät mit Energie versorgt wird, wobei eine Strommesseinheit vorgesehen ist, die den von der Energiequelle zur Verfügung gestellten Strom ermittelt, wobei in dem I/O Modul interne Widerstände vorgesehen sind, an denen jeweils ein von dem fließenden Strom abhängiger Spannungsabfall auftritt, und wobei eine Steuereinheit vorgesehen ist, die die Energiequelle so angesteuert, dass an den Anschlussklemmen eine vorgegebene Klemmenspannung zur Versorgung des Feldgeräts zur Verfügung steht.

Die interne Speisespannung wird in Abhängigkeit von dem aktuellen dem Feldgerät zur Verfügung stehenden Strom adaptiv auf ein Minimum geregelt. Hierdurch wird das Produkt aus Speisespannung und Speisestrom minimiert.

Eine vorteilhafte Ausgestaltung des erfindungsgemäßen Feldgeräts sieht vor, dass die Steuereinheit die Energiequelle so ansteuert, dass diese die Klemmspannung in Abhängigkeit von dem jeweils fließenden Strom dynamisch so regelt, dass der Betrieb des Feldgeräts jederzeit gewährleistet ist. Je nach fließendem 4-20 mA Strom kann die Klemmspannung so eingestellt werden, dass möglichst viel Energie eingespart wird. So benötigen Feldgeräte typischerweise bei hohen Strömen eine sehr viel geringere Klemmenspannung, z.B. 17V bei 4mA und 11 V bei 20mA. Möglich ist es in diesem Zusammenhang, ein Stromprofil des angeschlossenen Feldgeräts im I/O Modul abzulegen. Entsprechend dem gespeicherten Stromprofil wird nachfolgend die Klemmenspannung dynamisch mittels der Steuereinheit geregelt.

Bevorzugt handelt es sich bei der Strommesseinheit um einen Strommesswiderstand, über dem das analoge, den Messwert repräsentierende 4-20 mA Signal abgegriffen wird.

Insbesondere ist vorgesehen, dass es sich bei einem der internen Widerstände um einen Kommunikationswiderstand handelt, über dem das digitale HART Kommunikationssignal abgegriffen wird. Additiv oder alternativ handelt es sich bei einem der internen Widerstände um einen Strombegrenzungswiderstand, der so bemessen ist, dass er den Anforderungen für den Einsatz des Feldgeräts im explosionsgefährdeten Bereich genügt.

Eine bevorzugte Ausgestaltung des erfindungsgemäßen Feldgeräts sieht vor, dass es sich bei dem I/O Modul um einen Adapter mit zugeordneter Energiequelle handelt. Insbesondere ist der Adapter als Wireless Adapter ausgebildet, der über eine zugeordnete Funkeinheit mit einer übergeordneten Steuerung kommuniziert.

Eine Weiterbildung des autarken Feldgeräts sieht vor, dass die vorgegebene Klemmenspannung entweder einstellbar oder fest vorgegeben ist.

Weiterhin wird vorgeschlagen, dass es sich bei dem Feldgerät um ein Messgerät zur Bestimmung und/oder Überwachung einer Prozessgröße, um einen Aktor zur Beeinflussung einer Prozessgröße, um ein Auszeichnungsgerät, um ein Remote I/O, um ein Gateway oder um ein Linking Device handelt.

Bevorzugt betreibt die Steuereinheit das Feldgerät intermittierend: Hierbei wird die Energieversorgung während einer Ruhephase abgeschaltet bzw. minimiert; während einer Betriebsphase wird die zum Betrieb des Feldgeräts vorgegebene Klemmenspannung zur Verfügung gestellt.

Darüber hinaus schlägt eine Ausgestaltung des erfindungsgemäßen Feldgeräts vor, dass die Steuereinheit den Kommunikationswiderstand und den Strommesswiderstand je nach Bedarf selektiv zu- oder abschaltet.

Besonders vorteilhaft ist es weiterhin, wenn die Steuereinheit während des Hochfahrens des Feldgeräts den Kommunikationswiderstand und den Strommesswiderstand solange überbrückt, bis das Feldgerät betriebsbereit ist. Hierdurch lässt sich die Energieeffizienz der Feldgeräts zusätzlich erhöhen.

Soll das Feldgerät lediglich ein analoges 4-20 mA Signal zur Verfügung stellen, so ist vorgesehen, dass die Steuereinheit den Kommunikationswiderstand dauerhaft überbrückt. Stellt das Feldgerät ein digitales Kommunikationssignal auf der Basis des HART Protokolls zur Verfügung, so wird vorgeschlagen, dass die Steuereinheit den Strommesswiderstand dauerhaft überbrückt.

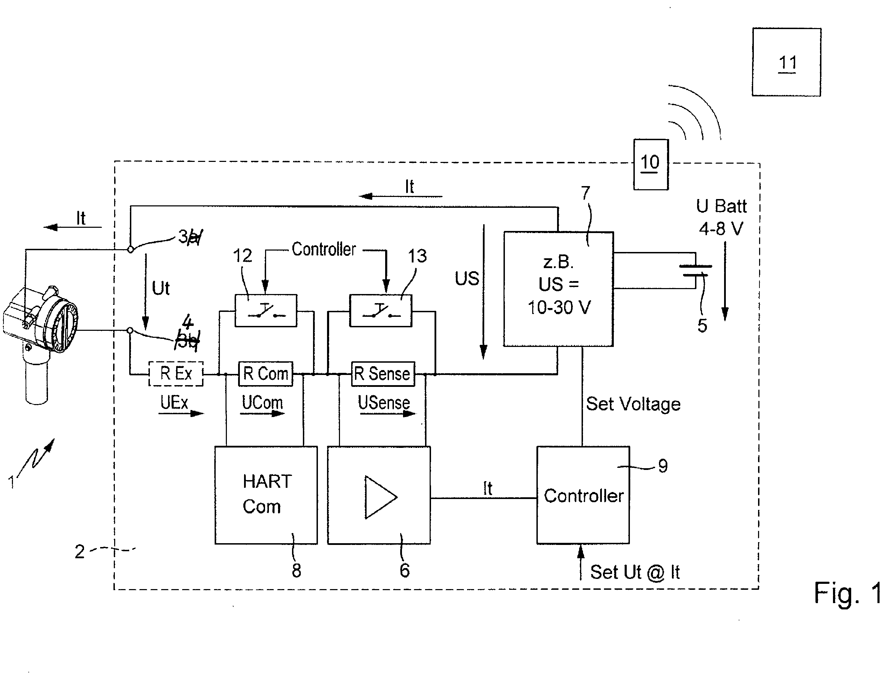

Die Erfindung wird anhand der nachfolgenden Fig. 1 näher erläutert. Fig. 1 zeigt eine Ausgestaltung des erfindungsgemäßen Feldgeräts 1. Bei dieser Ausgestaltung weist das Feldgerät 1 eine adaptive Regelung der Energieversorgung des Feldgeräts 1 auf. Zusätzlich werden im Messzweig des I/O Moduls befindliche interne Mess- und/oder Kommunikationswiderstände - Rsense, Rcom - selektiv in Abhängigkeit von der jeweiligen Betriebsphase je nach Bedarf zugeschaltet oder überbrückt. Durch beide Maßnahmen wird die Kapazität der Energieversorgungseinheit 5, bei der es sich im gezeigten Fall um eine Batterie oder um einen Batteriepack handelt, möglichst wenig beansprucht.

Dargestellt sind in Fig. 1 die Klemmenspannung Ut des Messumformers des Feldgeräts 1, die Speisespannung Us des Versorgungsnetzteils 7, die Spannung UBatt der Energiequelle 5 und die Spannungsabfälle Uex, Ucom und Usense an den Widerständen Rex, Rcom, Rsense.

Die Ex-Begrenzungswiderstände Rex haben typischerweise Werte im Bereich einiger 100 Ohm, der HART Kommunikationswiderstand Rcom weist mindestens 250 Ohm auf, und der Messwiderstand liegt zwischen ca. 50 bis 100 Ohm. Demzufolge können die Spannungsanfälle unter Annahme des höchsten Stromes It - Fehlerstrom von 22mA - im Bereich von 6 Volt für die Ex-Begrenzung, von 5,5 Volt für den Kommunikationswiderstand Rcom und 1- 2 Volt für den MesswidersandRsense liegen. Addiert man diese Spannungsabfälle auf, so müsste die Speisespannung Us um 12V größer sein als die Klemmenspannung Ut. Selbst außerhalb des explosionsgefährdeten Bereichs, wo der Widerstand Rex entfallen kann, müsste die Speisespannung Us immer noch um 6V größer sein als die Klemmenspannung Ut. Betrachtet man den idealen Fall, wenn der Versorgungsstrom It minimal ist und somit im üblicherweise nur 4mA beträgt, so beläuft sich die Differenz zwischen Speisespannung Us und Klemmenspannung Ut immer noch auf knapp 2,4 Volt.

Generell lässt sich sagen, dass hohe Speisespannungen Us problematisch für das Versorgungsnetzteil 7 sind, wenn dieses mit einer entsprechend niedrigen Quellspannung UBatt betrieben wird. Infolge der Differenz treten hohe Batterieströme auf, die zu einer erheblichen Reduktion der verfügbaren Batteriekapazität und damit zu einer Verringerung der Standzeit der Batterie bzw. der Energieversorgungseinheit mit begrenzter Kapazität führen.

Der in Fig. 1 gezeigte Controller bzw. die Steuereinheit 9 des I/O Moduls 2 kennt jederzeit die aktuelle Betriebsphase des angeschlossenen Feldgeräts 1 bzw. des Messumformers des Feldgeräts 1 und ermittelt den aktuellen Versorgungsstrom It. Der Strom, der während der Startup-Phase zum Hochfahren des Feldgeräts 1 erforderlich ist, ist der Steuereinheit 9 bekannt. Der Strom in der Startup-Phase ist als Parameter gesetzt.

Wie bereits zuvor erwähnt, schaltet die Steuereinheit 9 den Messwiderstand Rsense und Kommunikationswiderstand Rcom in Abhängigkeit von der jeweiligen Betriebsphase des Feldgeräts 1 selektiv zu, oder sie überbrückt einen oder beide Widerstände; wird einer der Widerstände oder auch beide während der aktuellen Betriebsphase nicht benötigt, so erfolgt eine entsprechende Überbrückung.

Je nach Betriebsphase werden die Widerstände Rcom und Rsense zugeschaltet oder nicht. Während der Startup-Phase des Messumformers des Feldgeräts 1 sind beispielsweise weder die HART Kommunikation noch die Strommessung erforderlich. In diesem Fall werden beide Widerstände beispielsweise durch Schalter 12, 13 überbrückt. Diese Überbrückung dauert solange, bis der Messumformer den ersten regulären Messwert ermittelt.

In der Betriebsphase 'Messung mit HART only Output', wenn das Feldgerät 1 im Multidrop betrieben wird, wird der Messwiderstand Rsense nicht benötigt und bleibt gebrückt. In diesem Fall ist der Strom It für den jeweiligen Messumformer konstant und bekannt.

In der Betriebsphase 'Messung mit 4-20mA only', wenn also die HART Kommunikation und damit auch der Kommunikationswiderstand Rcom nicht benötigt werden, wird der Kommunikationswiderstand Rcom gebrückt. In diesem Fall wird der fließende Messstrom It über dem Messwiderstand Rsense gemessen.

Wie bereits zuvor erwähnt, erfolgt erfindungsgemäß eine adaptive Regelung der Klemmenspannung Ut. Hierzu ändert die Steuereinheit 9 adaptiv die geforderte Klemmenspannung Ut, indem sie die Speisespannung Us in Abhängigkeit von dem gemessenen o. gegebenen Strom It, in Abhängigkeit von der jeweiligen Betriebsphase des Messumformers des Feldgeräts 1 und in Abhängigkeit von dem Schaltzustand der Widerstände Rsense, Rcom ggf. Rex verändert.

Eine Weiterentwicklung der Methode berücksichtigt Messumformers, die bei hohen Strömen mit niedrigeren Klemmenspannungen Ut auskommen, die für niedrige Ströme jedoch höhere Klemmenspannungen Ut benötigen. Diese Information kann in Form einer Tabelle im Controller abgelegt sein. Um ein Beispiel zu nennen: Bei 20mA genügen 10V, während bei 4 mA 16V als Klemmenspannung Us mittels der Steuereinheit 9 eingstellt werden müssen.

### Bezugszeichenliste

- 1: Feldgerät
- 2: I/O Modul bzw. Wireless Adapter
- 3: Klemme
- 4: Klemme
- 5: Energieversorgungseinheit
- 6: Strommesseinheit
- 7: Versorgungsnetzteil
- 8: Einheit zur Messung des Kommunikationswiderstands
- 9: Steuereinheit
- 10: Funkeinheit
- 11: übergeordnete Steuerung
- 12: Schalter
- 13: Schalter

## Patentansprüche

1. Autarkes Feldgerät (1) der Automatisierungstechnik, das über zwei Anschlussklemmen (3 und 4) mit einem I/O Modul (2) verbunden ist, wobei das I/O Modul (2) als 4-20 mA / HART I/O Modul ausgestaltet ist, wobei dem I/O Modul (2) eine steuerbare Energiequelle (5, 7) zugeordnet ist, über die das Feldgerät (1) mit Energie versorgt wird, wobei eine Strommesseinheit (6) vorgesehen ist, die den von der Energiequelle (5) zur Verfügung gestellten Strom ermittelt, wobei in dem I/O Modul (2) interne Widerstände (Rex, Rcom, Rsense) vorgesehen sind, an denen jeweils ein von dem fließenden Strom (It) abhängiger Spannungsabfall auftritt, und wobei eine Steuereinheit (9) vorgesehen ist, die die Energiequelle (5, 7) so ansteuert, dass an den Anschlussklemmen (3) eine vorgegebene Klemmspannung (Ut) zur Versorgung des Feldgeräts (1) zur Verfügung steht,
**dadurch gekennzeichnet, dass** die Steuereinheit (9) die Energiequelle (5, 7) so ansteuert, dass diese die Klemmspannung (Ut) in Abhängigkeit von dem jeweils fließenden Strom (It) dynamisch so regelt, dass bei minimalen Energieverbrauch der korrekte Betrieb des Feldgeräts (1) jederzeit gewährleistet ist.

2. Feldgerät nach Anspruch 1, wobei es sich bei der Strommesseinheit (6) um einen Strommesswiderstand (Rsense) handelt, über dem das analoge 4-20 mA Signal abgegriffen wird.

3. Feldgerät nach Anspruch 1 oder 2, wobei es sich bei einem der internen Widerstände um einen Kommunikationswiderstand (Rcom) handelt, über dem das digitale Kommunikationssignal (8) abgegriffen wird.

4. Feldgerät nach Anspruch 1 oder 2, wobei es sich bei einem der internen Widerstände um Strombegrenzungswiderstand (Rex) handelt, der so bemessen ist, dass er den Anforderungen für den Einsatz des Feldgeräts (1) in einem explosionsgefährdeten Bereich genügt.

5. Feldgerät nach Anspruch 1, wobei es sich bei dem I/O Modul (2) um einen Adapter mit zugeordneter Energiequelle (5) handelt.

6. Feldgerät nach Anspruch 1 oder 5, wobei es sich bei dem I/O Modul (2) um einen Wireless Adapter handelt, der über eine zugeordnete Funkeinheit (19) mit einer übergeordneten Steuerung (11) oder einem weiteren Funk-Feldgerät kommuniziert.

7. Feldgerät nach Anspruch 1, wobei die vorgegebene Klemmspannung (Ut) einstellbar oder fest vorgegeben ist.

8. Feldgerät nach Anspruch 1, wobei es sich bei dem Feldgerät (1) um ein Messgerät zur Bestimmung und/oder Überwachung einer Prozessgröβe, um einen Aktor zur Beeinflussung einer Prozessgröβe, um ein Auszeichnungsgerät, um ein Remote I/O, um ein Gateway oder um ein Linking Device handelt.

9. Feldgerät nach Anspruch 1,
wobei die Steuereinheit (9) das Feldgerät (1) intermittierend betreibt und die Energieversorgung während einer Ruhephase abschaltet bzw. minimiert und während einer Betriebsphase die zum Betrieb des Feldgeräts (1) vorgegebene Klemmspannung (Ut) zur Verfügung stellt.

10. Feldgerät nach Anspruch 1 oder 9, wobei die Steuereinheit (9) den Kommunikationswiderstand (Rcom) und den Strommesswiderstand (Rsense) selektiv zu- oder abschaltet.

11. Feldgerät nach Anspruch 1 oder 10, wobei die Steuereinheit (9) während des Hochfahrens des Feldgeräts (1) den Kommunikationswiderstand (Rcom) und den Strommesswiderstand (Rsense) solange überbrückt, bis das Feldgerät (1) betriebsbereit ist.

12. Feldgerät nach Anspruch 1 oder 3, wobei die Steuereinheit (9) den Kommunikationswiderstand (Rcom) dauerhaft überbrückt, wenn das Feldgerät (1) ein analoges 4-20 mA Signal zur Verfügung stellt.

13. Feldgerät nach Anspruch 1, wobei die Steuereinheit (9) den Strommesswiderstand (Rsense) dauerhaft überbrückt, wenn das Feldgerät (1) ein digitales Kommunikationssignal auf der Basis des HART Protokolls zur Verfügung stellt.

14. Feldgerät nach einem oder mehreren der vorhergehenden Ansprüche, wobei es sich bei der Energiequelle (5) um eine Batterie, um eine Brennstoffzelle, um eine Solarzelle oder um einen Akku handelt.

## Claims

1. Independent, self-sufficient field device (1) used in automation engineering which is connected to an I/O module (2) via two terminals (3 and 4), wherein the I/O module (2) is designed as a 4-20 mA HART I/O module, wherein a controllable energy source (5, 7) is assigned to the I/O module (2), via said source the field device (1) is supplied with energy, wherein a current measuring unit (6) is provided which determines the electricity provided by the energy source (5), wherein internal resistors (Rex, Rcom, Rsense) are provided in the I/O module (2) at which a voltage drop, which depends on the current that flows (It), occurs, and wherein a control unit (9) is provided which controls the energy source (5, 7) in such a way that a predefined terminal voltage (Ut) for powering the field device (1) is available at the terminals (3),
**characterized in that** the control unit (9) controls the energy source (5, 7) in such a way that the terminal voltage (Ut) is dynamically regulated as a function of the flowing current (It) in such a way that the correct operation of the field device (1) is always ensured with minimum energy consumption.

2. Field device as claimed in Claim 1, wherein the current measuring unit (6) is a current sensing resistor (Rsense) via which the analog 4-20 mA signal is captured.

3. Field device as claimed in Claim 1 or 2, wherein one of the internal resistors is a communication resistor (Rcom) via which the digital communication signal (8) is measured.

4. Field device as claimed in Claim 1 or 2, wherein one of the internal resistors is a current limiting resistor (Rex) which is designed in such a way that it satisfies the requirements for using the field device (1) in a hazardous area.

5. Field device as claimed in Claim 1, wherein the I/O module (2) is an adapter with an assigned energy source (5).

6. Field device as claimed in Claim 1 or 5, wherein the I/O module (2) is a wireless adapter which communicates with a master control system (11) or another radio field device via an assigned radio unit (19).

7. Field device as claimed in Claim 1, wherein the predefined terminal voltage (Ut) is adjustable or is fixed.

8. Field device as claimed in Claim 1, wherein the field device (1) is a measuring device designed to determine and/or monitor a process variable; an actuator for influencing a process variable; a recording unit; a remote I/O; a gateway or a linking device.

9. Field device as claimed in Claim 1,
wherein the control unit (9) operates the field device (1) intermittently and switches off or minimizes the energy supply during a rest phase and, during an operating phase, provides the predefined terminal voltage (Ut) for operating the field device (1).

10. Field device as claimed in Claim 1 or 9, wherein the control unit (9) selectively connects up or switches off the communication resistor (Rcom) and the current sensing resistor (Rsense).

11. Field device as claimed in Claim 1 or 10, wherein, when the field device (1) is booted, the control unit (9) bridges the communication resistor (Rcom) and the current sensing resistor (Rsense) until the field device (1) is ready for operation.

12. Field device as claimed in Claim 1 or 3, wherein the control unit (9) bridges the communication resistor (Rcom) permanently if the field device (1) makes an analog 4-20 mA signal available.

13. Field device as claimed in Claim 1, wherein the control unit (9) bridges the current sensing resistor (Rsense) permanently if the field device (1) makes available a digital communication signal based on the HART protocol.

14. Field device as claimed in one or more of the previous claims, wherein the energy source (5) is a battery, a fuel cell, a solar cell or a storage battery.

## Revendications

1. Appareil de terrain (1) autonome de la technique d'automatisation, qui est relié par l'intermédiaire de deux bornes de raccordement (3 et 4) avec un module E/S (2), le module E/S (2) étant conçu en tant que module E/S HART 4-20 mA, une source d'énergie (5, 7) étant attribuée au module E/S (2), source par l'intermédiaire de laquelle l'appareil de terrain (1) est alimenté en énergie, une unité de mesure de courant (6) étant prévue, laquelle détermine le courant mis à la disposition par la source d'énergie (5), des résistances internes (Rex, Rcom, Rsense) étant prévues dans le module E/S (2), aux bornes desquelles apparaît une chute de tension dépendant du courant (It) circulant, et une unité de commande (9) étant prévue pour commander la source d'énergie (5, 7) de telle manière qu'une tension de borne (Ut) prédéfinie, destinée à l'alimentation de l'appareil de terrain (1), soit disponible aux bornes de raccordement (3),
**caractérisé en ce que** l'unité de commande (9) commande la source d'énergie (5, 7) de telle manière que cette tension de borne (Ut) soit régulée de façon dynamique en fonction du courant (It) circulant, de telle sorte à garantir à tout moment le fonctionnement correct de l'appareil de terrain (1) avec une consommation minimale d'énergie.

2. Appareil de terrain selon la revendication 1, pour lequel il s'agit, concernant l'unité de mesure de courant (6), d'une résistance de mesure de courant (Rsense), par l'intermédiaire de laquelle le signal 4-20 mA analogique est prélevé.

3. Appareil de terrain selon la revendication 1 ou 2, pour lequel il s'agit, concernant les résistances internes, d'une résistance de communication (Rcom), par l'intermédiaire de laquelle le signal de communication (8) numérique est prélevé.

4. Appareil de terrain selon la revendication 1 ou 2, pour lequel il s'agit, concernant les résistances internes, d'une résistance limitatrice de courant (Rex), laquelle est dimensionnée de telle manière à répondre aux exigences relatives à une utilisation de l'appareil de terrain (1) dans une zone explosible.

5. Appareil de terrain selon la revendication 1, pour lequel il s'agit, concernant le module E/S, d'un adaptateur avec une source d'énergie (5) attribuée.

6. Appareil de terrain selon la revendication 1 ou 5, pour lequel il s'agit, concernant le module E/S, d'un adaptateur sans fil, qui communique par le biais d'une unité radio (19) avec un système de commande (11) maître ou un autre appareil de terrain radio.

7. Appareil de terrain selon la revendication 1, pour lequel la tension de borne (Ut) prédéfinie est réglable ou prédéfinie de façon fixe.

8. Appareil de terrain selon la revendication 1, pour lequel il s'agit, concernant l'appareil de terrain (1), d'un appareil de mesure destiné à ia détermination et/ou à la surveillance d'une grandeur process, d'un actionneur destiné à influencer une grandeur process, d'un appareil d'enregistrement, d'une E/S distante, d'une passerelle ou d'un dispositif de liaison.

9. Appareil de terrain selon la revendication 1, pour lequel l'unité de commande (9) exploite de façon intermittente l'appareil de terrain (1) et coupe ou minimise l'alimentation en énergie pendant une phase de repos et qui, pendant une phase de fonctionnement, met à disposition la tension de borne (Ut) prédéfinie pour le fonctionnement de l'appareil de terrain (1).

10. Appareil de terrain selon la revendication 1 ou 9, pour lequel l'unité de commande (9) met en/hors circuit, de façon sélective, la résistance de communication (Rcom) et la résistance de mesure de courant (Rsense).

11. Appareil de terrain selon la revendication 1 ou 10, pour lequel l'unité de commande (9) court-circuite pendant le démarrage de l'appareil de terrain (1) la résistance de communication (Rcom) et la résistance de mesure de courant (Rsense), jusqu'à ce que l'appareil de terrain (1) soit opérationnel.

12. Appareil de terrain selon la revendication 1 ou 3, pour lequel l'unité de commande (9) court-circuite durablement la résistance de communication (Rcom) lorsque l'appareil de terrain (1) met à disposition un signal 4-20 mA analogique.

13. Appareil de terrain selon la revendication 1, pour lequel l'unité de commande (9) court-circuite durablement la résistance de mesure de courant (Rsense) lorsque l'appareil de terrain (1) met à disposition un signal de communication numérique sur la base du protocole HART.

14. Appareil de terrain selon l'une ou plusieurs des revendications précédentes, pour lequel il s'agit, concernant la source d'énergie (5), d'une batterie, d'une pile à combustible, d'une photopile ou d'un accumulateur.
